# EUROPEAN PATENT SPECIFICATION

(11) **EP 3 425 222 B1**
(45) Date of publication and mention of the grant of the patent: **26.05.2021**
(21) Application number: 17760009.5
(22) Date of filing: 28.02.2017
(51) Int. Cl.: F16C 33/78, F16J 15/3244, F16J 15/328, F16C 19/06, F16C 19/36, F16C 19/16, F16C 33/66

(54) **BEARING WITH SEAL**
LAGER MIT DICHTUNG
PALIER À JOINT D'ÉTANCHÉITÉ

(30) Priority: 01.03.2016 JP 2016039133; 08.03.2016 JP 2016044387
(43) Date of publication of application: 09.01.2019
(73) Proprietor: NTN Corporation, Osaka-shi, Osaka 550-0003 (JP)
(72) Inventor: URUI, Shouta, Iwata-shi Shizuoka 438-8510 (JP); INAMASU, Kazunori, Iwata-shi Shizuoka 438-8510 (JP); WAKUDA, Takahiro, Iwata-shi Shizuoka 438-8510 (JP)
(74) Representative: Grünecker Patent- und Rechtsanwälte PartG mbB
(86) International application number: PCT/JP2017/007837
(87) International publication number: WO 2017/150544

(56) References cited:
- EP-A2- 0 088 517
- FR-A1- 2 636 691
- JP-A- H0 942 463
- JP-A- H08 247 155
- JP-A- H08 291 867
- JP-A- H09 177 988
- JP-A- H10 169 785
- JP-A- 2003 090 441
- JP-A- 2015 014 303
- JP-U- S5 463 843
- SE-C1- 225 796
- US-A- 3 534 969
- US-A- 3 633 927
- US-A- 4 772 138
- US-A- 5 759 466

## Description

### TECHNICAL FIELD

The present invention relates to a sealed bearing comprising a rolling bearing and seal members.

### BACKGROUND ART

Foreign objects such as wear dust produced from gears exist in transmissions mounted on vehicles such as automobiles and construction machinery. Rolling bearings used in such transmissions therefore include seal members which prevent entry of foreign objects into the bearing interior space, thereby preventing premature breakage of the rolling bearings.

Such seal members usually include a seal lip made from e.g., rubber. Bearing parts that rotate in the circumferential direction relative to the seal members, such as bearing races or slingers, are formed with seal sliding surfaces with which the seal lips of the seal members are in sliding contact. In this arrangement, since the seal lips are in sliding contact with the respective seal sliding surfaces over the entire circumference thereof, the drag resistance of the seal lips (seal torque) is high, which results in increased bearing torque. Also, the friction due to such slide contact increases the temperature of the rolling bearing. The higher the temperature of the bearing, the more strongly the seal lips tend be pressed against the seal sliding surfaces due to an increased pressure difference between the interior space of the bearing and the exterior of the bearing, thus further increasing the friction therebetween. In order to reduce the seal torque of such a seal member, which is in contact with the seal sliding surface, the below-identified Patent Document 1 proposes to subject the seal sliding surface to shot peening to form minute undulations thereon such that the seal sliding surface has a maximum roughness Ry of 2.5 micrometers or less, thereby promoting the formation of oil film between the seal lip and the seal sliding surfaces by lubricating oil trapped in the recesses of the minute undulations.

### PRIOR ART DOCUMENT(S) PATENT DOCUMENT(S)

Patent Document 1: JP Patent Publication 2007-107588A. FR 2 636 691 A1 discloses a sealed bearing defining a bearing interior space, the sealed bearing comprising: a seal member separating the bearing interior space from an exterior of the bearing, the seal member including a seal lip; a seal sliding surface configured to slide relative to the seal lip in a circumferential direction; and a plurality of protrusions formed on circumferential portions of the seal lip, and arranged at equal intervals over the entire circumference, and the protrusions defining oil passages extending between the seal sliding surface and the seal lip, the oil passages communicating with the bearing interior space and the exterior of the bearing; wherein the protrusions are shaped and arranged such that fluid lubricating condition can be created between the seal lip and the seal sliding surface, the seal lip has a distal edge that defines a radially inner diameter of the seal lip when the seal member is in a natural state and not stressed by any external force; wherein the plurality of protrusions is formed on a side of the seal lip, which faces the bearing interior space with respect to the distal edge.

### SUMMARY OF THE INVENTION

A sealed bearing according to claim 1 is provided.

### OBJECT OF THE INVENTION

By subjecting the seal sliding surface to shot peening as disclosed in Patent Document 1, the seal torque decreases because the area of the portion of the seal sliding surface that is brought into sliding contact with the seal lip decreases. However, since it is difficult to significantly reduce this area, the seal torque cannot be significantly reduced, either.

Immediately after the bearing begins to operate, oil film forms easily since the temperature of lubricating oil is relatively low, and its viscosity is relatively high. However, as the bearing is operated continuously, the oil temperature rises and its viscosity decreases, thus making the formation of oil film increasingly difficult. Also, the higher the operating speed of the bearing, the higher the peripheral speed of the seal sliding surface relative to the seal lip, so that a larger amount of heat is generated due to friction between the seal lip and the seal sliding surface, resulting in an increased oil temperature and the progression of wear of the seal lip. Thus, the maximum speed, i.e., maximum rotational speed, of the sealed bearing disclosed in Patent Document 1 is limited due to its lubricating conditions. That is, while there is a strong demand for sealed bearings which are capable of supporting rotating parts in the drive train of an electric vehicle (EV) and capable of being operated at high speed, sealed bearings whose seal sliding surfaces are subjected to shot peening for reduced torque cannot meet this demand.

While a bearing with non-contact seal members is free of seal torque, it is difficult to accurately manage the sizes of the gaps between the non-contact seal members and bearing parts to prevent entry of foreign objects larger in diameter than a predetermined threshold.

The seal lip of such a seal member is molded in upper and lower molds with the parting line, i.e., the line along which the upper and lower molds abut each other, located at the distal edge of the seal lip. As a result, material forming the seal lip could partially stick out of the distal edge into the parting line, forming burrs. Such burrs, which are initially integral with the distal edge of the seal member, may separate from the seal lip during operation of the bearing, and could clog oil filters and oil passages.

An object of the present invention is to reduce torque and increase speed of a sealed bearing, while preventing entry of foreign objects larger in diameter than a predetermined threshold, and also preventing formation of burrs at the distal edge of the seal lip..

### MEANS FOR ACHIEVING THE OBJECT

In order to achieve this object, the present invention provides a sealed bearing defining a bearing interior space, the sealed bearing comprising: a seal member separating the bearing interior space from an exterior of the bearing, the seal member including a seal lip; a seal sliding surface configured to slide relative to the seal lip in a circumferential direction; and a protrusion formed on one circumferential portion of the seal lip, and defining oil passages extending between the seal sliding surface and the seal lip, the oil passages communicating with the bearing interior space and the exterior of the bearing; wherein the protrusion is shaped and arranged such that fluid lubricating condition can be created between the seal lip and the seal sliding surface, the seal lip has a distal edge that defines a radially inner diameter of the seal lip when the seal member is in a natural state and not stressed by any external force, and the protrusion has a height that gradually decreases toward the distal edge of the seal lip.

### ADVANTAGES OF THE INVENTION

With this arrangement, the protrusion defines oil passages between the seal sliding surface and the seal lip, and as the bearing rotates, lubricating oil in the oil passages is pulled into the space between the seal sliding surface and the seal lip due to the wedge effect, so that oil film can be easily formed therebetween. As a result, the bearing can be operated with the seal lip and the seal sliding surface completely separated from, and out of contact with, each other (i.e., with fluid lubricating condition created therebetween), so that the seal torque can be reduced to practically zero. This practically prevents the wear of the seal lip, and reduces heat buildup due to sliding movement between the seal lip and the seal sliding surface. This increases the maximum allowable peripheral speed of the seal sliding surface relative to the seal lip, which in turn makes it possible to operate the sealed bearing assembly at a high speed that was not attainable with conventional sealed bearings. It is also possible to prevent sticking of the seal lip.

It is possible to determine the maximum diameter of foreign objects that can pass through the oil passages based on the protruding height of the protrusion. Thus, it is possible to freely determine the minimum particle diameter of foreign objects that cannot pass through the oil passages into the bearing.

The shape of the seal lip when the seal member is in an unstressed natural state corresponds to the shape of the seal lip when the seal lip is formed in molds. In this state, the distal edge of the seal lip that defines the radially inner diameter of the seal lip is located on the parting line along which the upper and lower molds abut each other. If the protrusion extends to the distal edge of the seal lip, the higher the protrusion, the steeper the undulation for forming the protrusion tends to be at the parting line. As a result, the pressure tends to be high at the undulation during molding of the seal lip, so that burrs tend to form. Thus, if the protrusion is formed such that its height decreases gradually toward the distal edge of the seal ring, the undulation for forming the protrusion is less steep at the parting line, or no undulation forms at the parting line. This prevents the formation of burrs at the distal edge of the seal lip.

Therefore, according to the present invention, it is possible to reduce the torque and increase the speed, of a sealed bearing, while preventing entry of foreign objects having particle diameters larger than a predetermined value, and also preventing the formation of burrs at the distal edge of the seal lip.

### BRIEF DESCRIPTION OF THE DRAWINGS

Fig. 1 is a sectional view of a sealed bearing assembly according to a first embodiment of the present invention.
Fig. 2 is an enlarged view of (and around) a seal lip of a seal member on the right of Fig. 1.
Fig. 3 is an enlarged sectional view taken along line III-III of Fig. 2.
Fig. 4 is a partial front view of a seal lip of the first embodiment, as seen in the axial direction.
Fig. 5 is a partial perspective view of a seal lip of the first embodiment.
Fig. 6A shows how the seal lip of Fig. 5 is formed by vulcanization.
Fig. 6B schematically illustrates the seal lip formed in the process of Fig. 6A.
Fig. 7A shows how a hypothetical seal lip is formed by vulcanization.
Fig. 7B schematically illustrates the seal lip formed in the process of Fig. 7A.
Fig. 8 shows the numbers of foreign objects in lubricating oil in vehicle transmissions (AT/MT) for respective particle diameter ranges.
Fig. 9 is a circular graph showing the percentages of foreign objects in the respective particle diameter ranges shown in Fig. 8.
Fig. 10 shows the numbers of foreign objects in lubricating oil in vehicle transmissions (CVT) for respective particle diameter ranges.
Fig. 11 is a circular graph showing the percentages of foreign objects in the respective particle diameter ranges shown in Fig. 10.
Fig. 12 is a lubrication region chart showing a fluid lubricating mode in the first embodiment.
Fig. 13 is a graph showing, in the first embodiment, the relationship between the intervals between protrusions and the theoretical oil film thickness and between the intervals between the protrusions and the bearing rotation torque.
Fig. 14 is a graph showing, in the first embodiment, the relationship between the dimension of a rounded shape of protrusions and the theoretical oil film thickness.
Fig. 15 is a sectional view of a sealed bearing according to a second embodiment of the present invention.
Fig. 16 is an enlarged view of (and around) a seal lip of a seal member on the right of Fig. 15.
Fig. 17 is a sectional view of a sealed bearing according to a third embodiment of the present invention.
Fig. 18 is a sectional view of a sealed bearing according to a fourth embodiment of the present invention.
Fig. 19 illustrates, in the fourth embodiment, the relationship between the intervals between protrusions and the theoretical oil film thickness.
Fig. 20 is a sectional view of a transmission including sealed bearings according to the present invention.

### PREFERRED ARRANGEMENTS FOR EMBODYING THE INVENTION

Preferred arrangements of this invention are described.

In a first preferred arrangement, there is a flat surface between the distal edge of the seal lip and the protrusion. In the first preferred arrangement, since there is no undulation for forming the protrusion at the parting line, it is possible to prevent the formation of burrs at the distal edge of the seal lip.

In a second arrangement, the protrusion comprises a plurality of protrusions that are arranged at equal intervals over the entire circumference. According to the second arrangement, it is possible to reliably form uniform oil film over the entire circumference of the seal sliding surface.

In a third arrangement, wedge-shaped gaps are defined between the protrusion or each of the protrusions and the seal sliding surface such that each wedge-shaped gap is larger on the corresponding oil passage than on the side of the protrusion. With the third arrangement, as the bearing rotates, lubricating oil in the oil passages can be reliably pulled toward the protrusion(s) due to the wedge-effect, so that oil film reliably forms between the protrusion(s) and the seal sliding surface. Since the protrusion(s) is shaped to define a wedge-shaped gap, its sliding contact area is small, which reduces the sealing torque.

In a fourth arrangement, protrusion(s) extends in a direction perpendicular to the circumferential direction, and has a rounded shape such that the distance between the protrusion and the seal sliding surface gradually decreases from the respective ends of the protrusion toward the center of the protrusion, with respect to the circumferential width of the protrusion. Such rounded shape reduces the sliding contact area of the protrusion, i.e., allows the protrusion to be in sliding contact with the seal sliding surface along a linear area. By using the rounded shape, the wedge angle of each wedge-shaped gap decreases gradually in one direction. This effectively increases the wedge effect, thus increasing the oil pressure at the linear contact area, which in turn makes it possible to easily create fluid lubricating condition between the protrusion and the seal sliding surface. Even if the protrusion is rubbed against the seal sliding surface when mounting the seal member, since the protrusion has a rounded shape, it will never be bent in the circumferential direction, so that there is no possibility that the seal torque reducing capability will be damaged when mounting the seal member.

### EMBODIMENTS

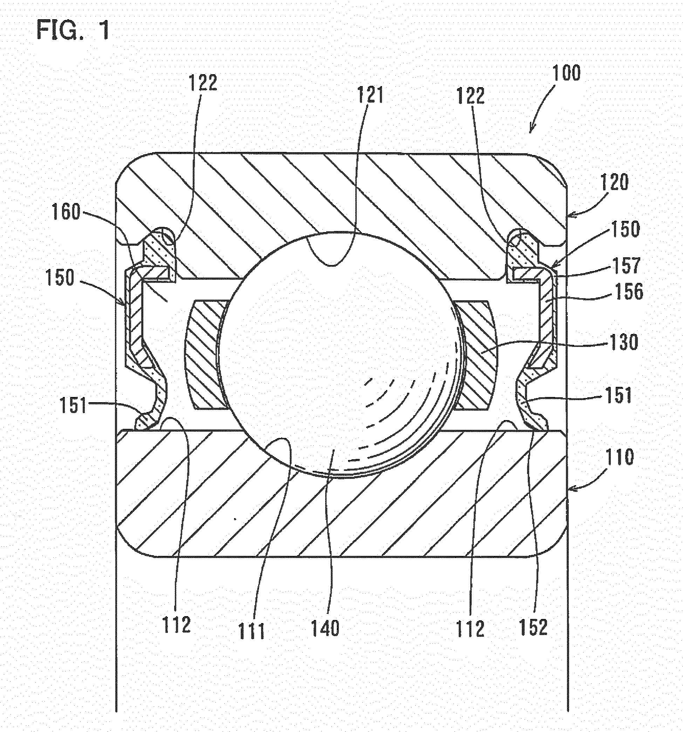

A first embodiment of the present invention is described with reference to Figs. 1-14. As shown in Fig. 1, the first embodiment is a sealed bearing 100 including an inner race 110, an outer race 120, a plurality of rolling elements 140 retained by a retainer 130, and two seal members 150. Throughout the specification, the direction of the center axis of the sealed bearing 100 is referred to as the "axial direction", a direction perpendicular to the center axis of the sealed bearing 100 is referred to as a "radial direction", and a circumferential direction around the center axis of the sealed bearing 100 is simply referred to as the "circumferential direction".

The inner race 110 and the outer race 120 define an annular, bearing interior space 160 in which the rolling elements 140 are disposed such that the rolling elements 140 roll around the center axis of the sealed bearing 100 while being held between the inner race 110 and the outer race 120. Lubricating oil is supplied to the bearing interior space 160 in the form of grease or from an oil bath.

The inner race 110 is mounted to a rotary shaft (not shown) so as to rotate together with the rotary shaft. The rotary shaft may be a rotary member of a vehicle transmission or differential. The outer race 120 is mounted to a member, such as a housing or a gear, that supports loads from the rotary shaft.

The sealed bearing 100 is a deep groove ball bearing, of which the rolling elements 140 are balls. The inner race 110 and the outer race 120 have raceways 111 and 121 each extending in cross-section (i.e., the section shown in Fig. 1) one-third of the circumference of the rolling element 140, and continuously extending the entire circumference of the respective race 110, 120.

The seal members 150 are retained in seal grooves 122 formed in the respective ends of the inner periphery of the outer race 120. In particular, the seal members 150 are mounted to the outer race 120 by having the outer peripheral edges thereof press-fitted in the respective seal grooves 122.

The seal members 150 separate the bearing interior space 160 from the exterior of the bearing 100. In the exterior of the bearing 100, i.e., the space outside the seal members 150, there exist foreign objects which vary according to the device or structure in which the sealed bearing 100 is mounted, such as wear dust from gears or clutches, or minutely crushed stone. Such powdery foreign objects could reach the area around the seal members 150 due to the flow of lubricating oil or the ambient air. The seal members 150 prevent entry of foreign objects into the bearing interior space 160 from outside the bearing 100.

Each seal member 150 includes a seal lip 151 protruding from its inner peripheral portion like a tongue. The inner race 110 has, on its outer periphery, seal sliding surfaces 112 that slide in the circumferential direction relative to the respective seal lips 151. The seal sliding surfaces 112 are cylindrical surfaces, that is, they extend the entire circumference of the inner race 110. The seal lips 151 are radial lips. As used herein, a radial lip refers to a seal lip that is in contact with a seal sliding surface extending in the axial direction or inclined at an acute angle of 45 degrees or less relative to the axial direction, with radial interference relative to the seal sliding surface, thereby providing a seal between the seal lip and the seal sliding surface.

The seal lips 151 are in contact with the respective seal sliding surfaces 112 with radial interference therebetween. The radial interference causes the seal lips 151 to be radially pressed against the seal sliding surfaces 112, and thus elastically deformed so as to be bent outwardly. In other words, the seal lips 151 are strained due to the radial interference. Mounting errors, manufacturing errors, and any other errors of the seal members 150 are absorbed by the seal lips 151 being elastically bent.

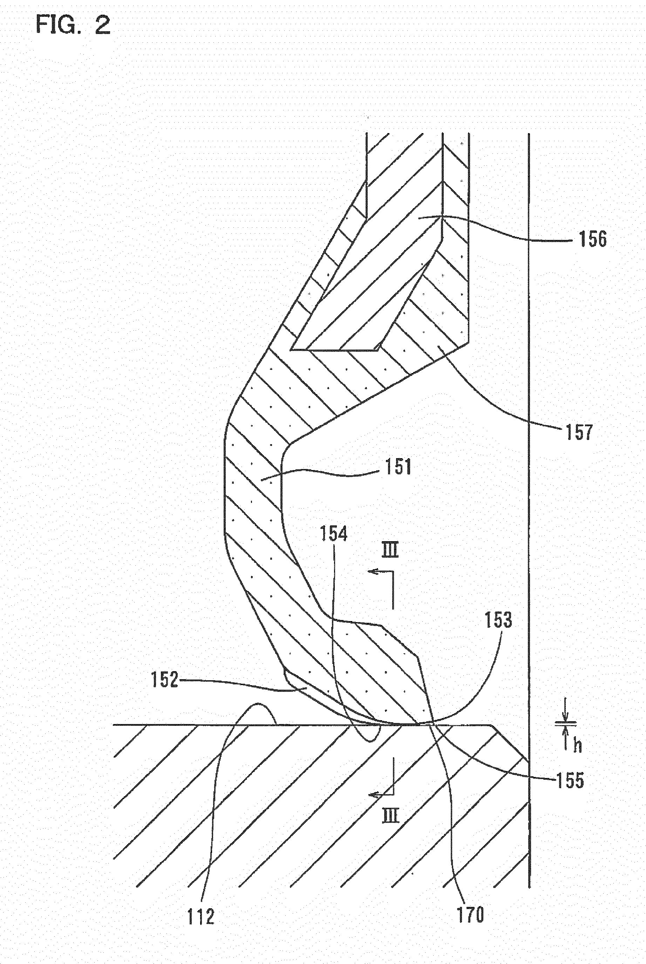

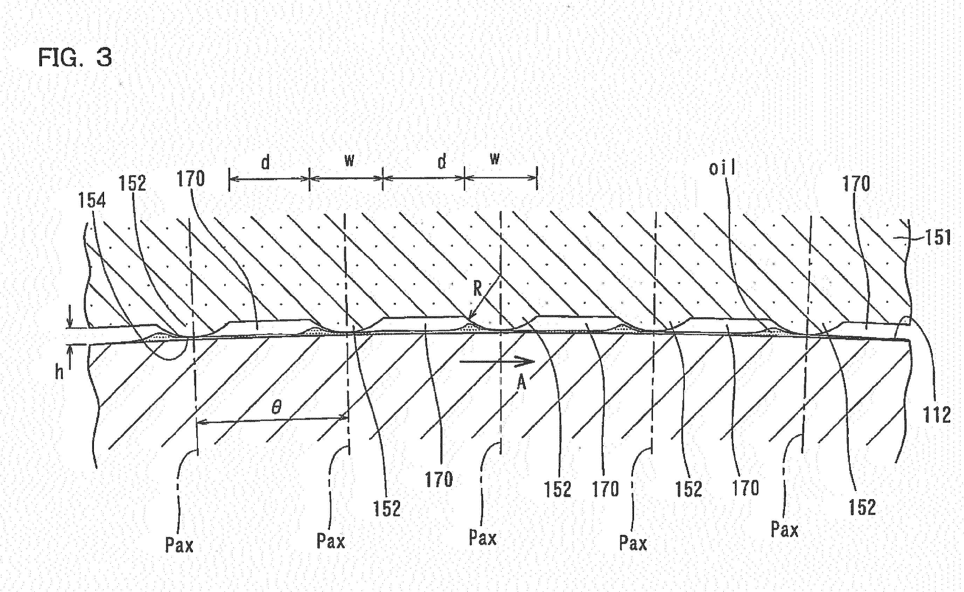

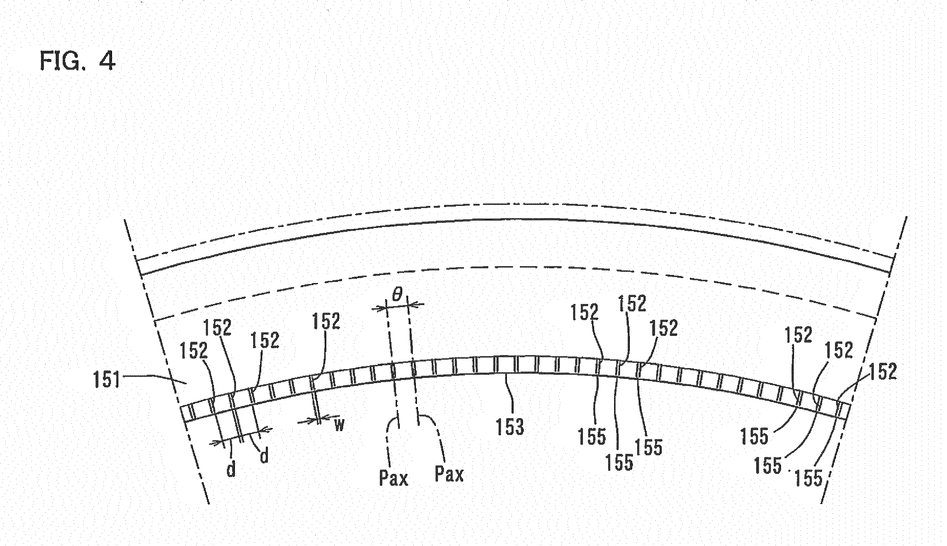

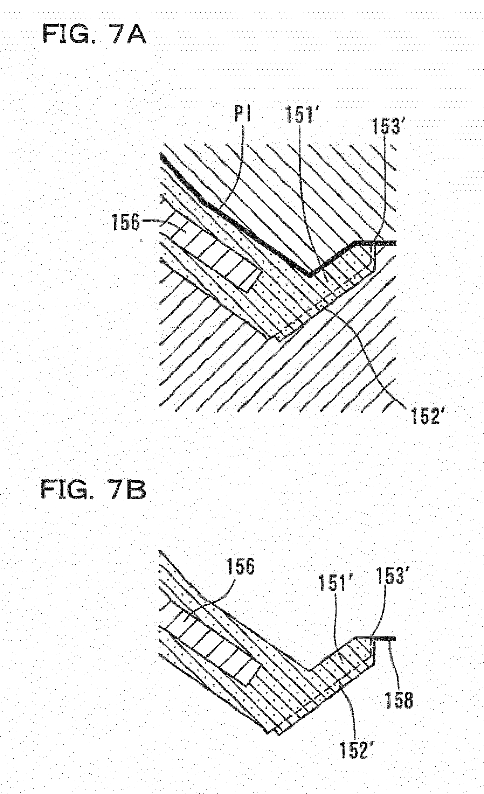

Fig. 2 shows an enlarged view of (and around) the seal lip 151 of one of the seal members 150 of Fig. 7. Fig. 3 shows a sectional view taken along line III-III of Fig. 2. The seal member 150 is designed such that the gaps between the seal lip 151 and the seal sliding surface 112 (including the gaps defined by oil passages 170) in the direction perpendicular to the seal sliding surface 112 are the narrowest at the section of Fig. 3. Fig. 4 shows the contour of the seal lip 151 as seen in the axial direction from the bearing interior space while the seal member 150 is not yet mounted on the bearing and thus not deformed by an external force. (This state is hereinafter referred to as the "unstressed state".)

As seen in Figs. 2-4, the seal lip 151 has protrusions 152 protruding in the directions perpendicular to the seal sliding surface 112, i.e., in the normal directions perpendicular to the tangential directions of the seal sliding surface 112. Since the seal sliding surface 112 is a cylindrical surface having a center on the center axis of the bearing, the above-mentioned normal directions are the radial directions.

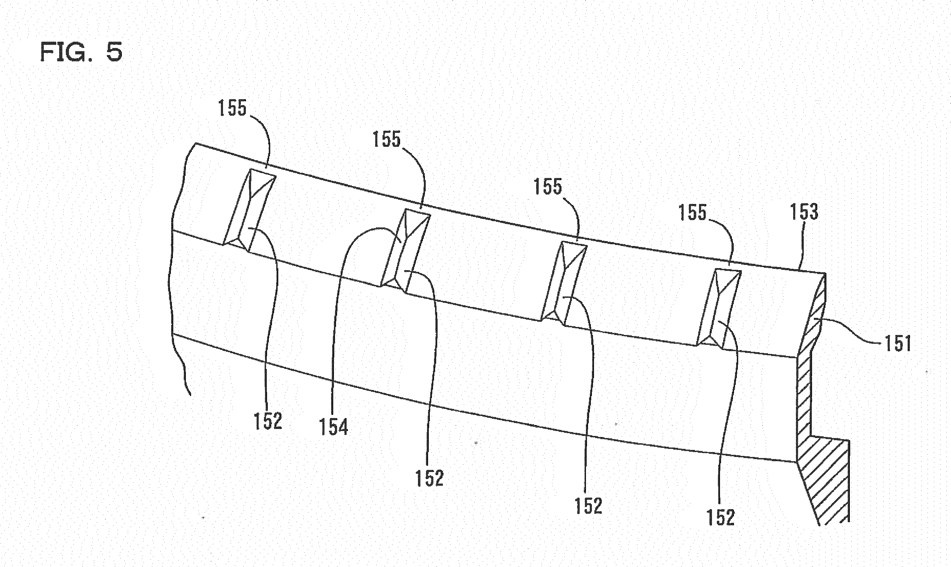

Fig. 5 is an enlarged perspective view of a portion of the seal lip 151 including some of the protrusions 152 when the seal lip 151 is in an unstressed state. As shown in Figs. 4 and 5, the seal lip 151 has a distal edge 153 that defines the radially inner diameter of the seal lip 151 when the seal member 150 is in the unstressed state.

As shown in Figs. 2-5, the protrusions 152 extend in the direction perpendicular to the circumferential direction to the area close to the distal edge 153 of the seal lip 151 such that the protrusions 152 exist on substantially the entire width of the portion of the seal lip 151 that is in contact with the seal sliding surface 112 with radial interference.

The protrusions 152 are arranged at regular circumferential intervals d. In other words, when the seal lip 151 is seen in the axial direction, the protrusions 152 are arranged radially at regular angular pitches θ corresponding to the circumferential intervals d, i.e., lie on radial lines extending from the center axis of the seal member 150. (This center axis is not shown, and coincides with the center axis of the bearing).

Since the radially extending protrusions 152 are disposed adjacent to the distal edge 153 of the seal lip 151, by suitably determining the circumferential intervals d, and the circumferential widths w of the respective protrusions 152, it is possible to bring the seal lip 151 into sliding contact with the seal sliding surface 112 only at the protrusions 152, and thus to always define the oil passages 170 between the protrusions 152. That is, intervals d and widths w are determined such that, when mounting the seal member 150, the protrusions 152, which are in contact with the seal sliding surfaces 112, remain uncollapsed by the stretching force of the seal ring 151 so that the oil passages 170 form between the respective circumferentially adjacent pairs of protrusions 152, and lubricant can flow into the bearing interior space 160 from outside the bearing through the oil passages 170. Lubricating oil that has flowed into the bearing interior space 160, or the base oil of grease sealed in the bearing interior space 160 can flow through the oil passages 170 to the outside of the bearing.

The maximum particle diameter of foreign objects that can pass through the oil passages 170 can be determined based on the heights h of the protrusions 152, i.e., their dimensions in the direction perpendicular to the seal sliding surface 112. Thus, in the first embodiment, it is possible to freely determine the minimum particle diameter of foreign objects that cannot pass through the oil passages 170 into the bearing interior space 160.

Wear dust greater than 50 micrometers in particle diameter could cause premature damage to the rolling bearing. If the heights h of the protrusions 152 are 0.05 mm or less, such wear dust is unable pass through the oil passages 170. On the other hand, for smooth flow of oil through the oil passages 170, the heights h of the protrusions 152 are preferably 0.05 mm or over.

Wedge-shaped gaps are defined between each protrusion 152 and the seal sliding surface 112 such that the width of each wedge-shaped gap gradually increases in the circumferential direction toward the corresponding oil passage 170. Referring to Fig. 3, when the inner race 110 rotates, and thus, the seal sliding surface 112 rotates in the circumferential direction (for example, in the direction of the arrow A in Fig. 3) relative to the seal lip 151, lubricating oil (shown in dotted pattern) in each oil passage 170 is pulled into the space between the seal sliding surface 10 and the corresponding one of the protrusions 152 of the seal lip 151, due to the rotation of the seal sliding surface 112, so that oil film is formed easily therebetween, thereby reducing the friction coefficient (µ) between the seal lip 151 and the seal sliding surface 112, which in turn reduces the seal torque. The oil passages 170 allow oil to flow more easily between the bearing interior space 160 and the exterior of the bearing. This prevents an excessive rise in temperature of the sealed bearing 100, which in turn prevents sticking of the seal lip 151.

As shown in Fig. 5, the protrusions 152 gradually decrease in height toward the distal edge 153 of the seal lip 151. In order to gradually reduce the height of each protrusion 152 toward the distal edge 153 of the seal lip 151, the radius of curvature of the rounded surface of the protrusion 152 is gradually increased, while the center of curvature of the rounded surface is gradually moved outwardly, toward the distal edge 153 of the seal lip 151.

The heights h of the protrusions 152 are practically zero at the distal edge 153 of the seal lip 151. In other words, the protrusions 152 terminate short of the distal edge 153 of the seal lip 151, so that there is a flat surface 155 extending the entire circumference of the seal lip 151 between the protrusions 152 and the distal edge 153 of the seal lip 151. Thus, the distal edge 153 of the seal lip 151 forms a boundary between the flat surface 155, which extends the entire circumference of the seal lip 151 and faces the bearing interior space, and the outer surface of the seal lip 151 which extends the entire circumference of the seal lip 151.

As shown in Fig. 1, each seal member 150 comprises a metal core 156 in the form of a metal plate, and a vulcanized rubber section 157 adhered to at least a radially inner portion of the metal core 156. The seal lip 151 is a tongue-shaped portion of the vulcanized rubber section 157. The metal core 156 is an annular member, i.e., a member that extends the entire circumference, formed by pressing. The vulcanized rubber section 157 is formed by vulcanizing a rubber material. The seal member 150 is formed, for example, by placing the meal core 156 in a mold, and forming the vulcanized rubber section 157 by vulcanization such that the metal core 156 and the vulcanized rubber section 157 form an integral body. The vulcanized rubber section 157 may be adhered to the entire metal core 156, or adhered only to the radially inner portion of the metal core 156.

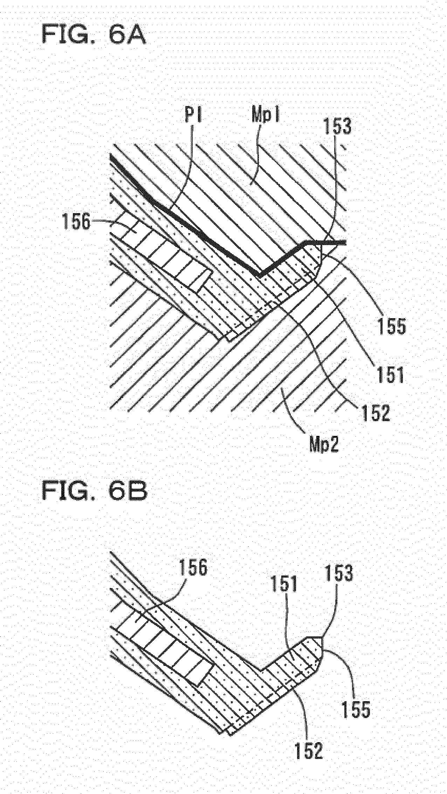

Figs. 6A and 6B show how the seal lip 151 is formed by vulcanization. For better understanding, Figs. 6A and 6B only schematically show the shape of the seal lip 151, and other elements. The seal lip 151 is formed by attaching, by vulcanization, a rubber sheet to the metal core 156. During vulcanization, the rubber portion of the seal member 150, including the seal lip 152, is formed by sandwiching the rubber sheet between an upper mold Mp1 and a lower mold Mp2. The upper mold Mp1 is arranged over the lower mold Mp2 with respect to the vertical direction such that the vertical direction corresponds to the axial direction of the bearing. Therefore, the distal edge 153 of the seal lip 151, which defines the radially inner diameter of the seal lip 151 when the seal member is in its unstressed state, forms a boundary between the upper surface of the seal lip 151, which is in contact with the transfer surface of the upper mold Mp1, and the lower surface of the seal lip 151, which is in contact with the transfer surface of the lower mold Mp2. In other words, the distal edge 153 of the seal lip 151 is located on the parting line PI of the upper mold Mp1 and the lower mold Mp2, where the upper mold Mp1 and the lower mold Mp2 meet.

Figs. 7A and 7B show a hypothetical seal lip 151' of which the protrusions 152' extend up to the distal edge 153' of the seal lip 151'. In this case, since undulations for forming such protrusions 152' extend up to the parting line PI, burrs 158 as shown in Fig. 7B tend to be formed after vulcanization. If such burrs 158 separate from the seal lip 161' during operation of the bearing, they could clog oil filters and lubricating oil circulating paths.

On the other hand, by providing, as shown in Figs. 6A and 6B, the flat surface 155 between the protrusions 152 and the distal edge 153 of the seal lip 151, undulations for forming the protrusions 152 do not extend to the parting line PI, so that no burrs 158 as shown in Figs. 7A and 7B are formed. The arrangement of the first embodiment thus prevents the formation of burrs at the distal edge 153 of the seal lip 151 of the seal member 150 when forming the seal lip 151 by vulcanization.

In the first embodiment, the heights of the protrusions 152 are zero at the distal edge 153 of the seal lip 151, and there is the flat surface 155 between the protrusions 152 and the distal edge 153 of the seal lip 151. Alternatively, the protrusions may extend up to the distal edge of the seal lip, as far as their heights gradually decrease toward the distal edge of the seal lip. In this arrangement, since undulations for forming the protrusions are less steep at the parting line, burrs are less likely to be formed at the distal edge of the seal lip.

In the first embodiment, it is possible to form the protrusions 152 on the seal lip 151 during vulcanization. The seal sliding surface 112 may be a cylindrical surface or a groove having the same section over the entire circumference thereof, and can be formed directly on one of the raceways, so that the seal sliding surface 112 can be formed easily.

The seal lip 151 and the seal sliding surface 112 are shaped and arranged such that the (solid) protrusions 152 are not substantially deformed (i.e., not deformed such that the lubricating properties between the protrusions 152 and the seal sliding surface 112 are affected) due to the stretching force of the seal lip 151 and the oil pressure of lubricating oil. Thus, during operation of the bearing, the protrusions 162 maintain the shape when the seal lip 151 is formed by vulcanization by transferring the shape of the mold.

The sealed bearing 100 is intended to be used in a vehicle transmission. Ordinarily, oil is supplied to a sealed bearing in a vehicle transmission by splashing, from an oil bath, or by nozzle injection. Therefore, lubricating oil exists around the seal lips of the seal members fixed to the inner race or the outer race of such a sealed bearing. Lubricating oil used for such a sealed bearing race is also used to lubricate parts of the transmission to be lubricated, such as gears. Such lubricating oil is circulated by an oil pump, and filtered by an oil filter in the circulation path of the lubricating oil.

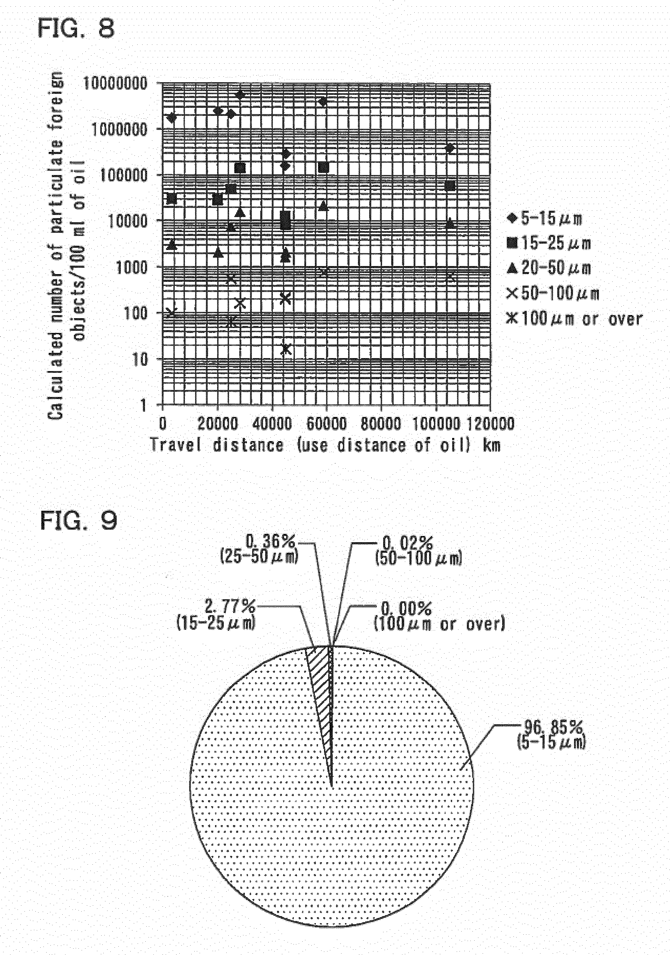

The inventors of the present application recovered lubricating oil from eight automatic transmission (AT) or manual transmission (MT) vehicles which had been actually used on the road, and whose odometer readings were different from each other. Then, for the lubricating oil recovered from each of the eight vehicles, the numbers of (particulate) foreign objects in the lubricating oil for respective ranges of the particle diameters of the foreign objects were counted, and are shown in the graph of Fig. 8. The materials of the foreign objects were also investigated. In the graph of Fig. 8, the vertical axis indicates, on logarithmic scale, the number of foreign objects per 100 ml of lubricating oil in each of particle diameter ranges of not less than 5 µm and less than 15 pm, not less than 15 µm and less than 25 µm, not less than 20 µm and less than 50 pm, not less than 50 µm and less than 100 pm, and not less than 100 µm. The horizontal axis indicates the travel distances of the respective vehicles. Foreign objects having diameters smaller than 5 µm were not counted. The numbers of foreign objects in the respective particle diameter ranges were counted by a particulate foreign object weighing method, using a measuring machine made by Hyac-Royco, Model No. 8000A. The circular graph of Fig. 9 shows the percentages (in number) of the foreign objects in the respective particle diameter ranges shown in Fig. 8.

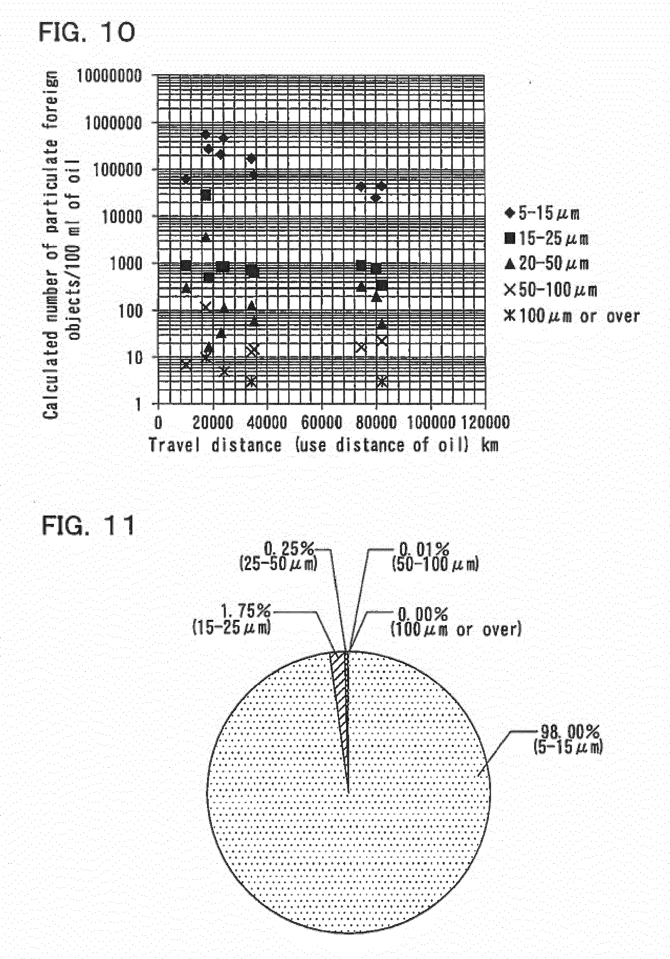

Fig. 10 is a graph similar to Fig. 8 and showing the numbers of foreign objects in the respective particle diameter ranges for lubricating oil recovered from ten continuously variable transmission (CVT) vehicles. The circular graph of Fig. 11 shows these numbers in percentage. While the manufactures, the makes, and the travel distances of the abovementioned eight and ten vehicles vary, comparison of Figs. 8 and 9 with Figs. 10 and 11 reveals that foreign objects in the lubricating oil from the AT/MT vehicles, in which a larger number of gears are used, are larger in particle diameter and number than those in the lubricating oil from the CVT vehicles. Irrespective of the type of the transmission, the number of foreign objects in the particle diameter range of not more than 50 µm accounted for 99.9% or over of the total number of foreign objects in the lubricating oil. The number of foreign objects larger in particle diameter than 50 µm was less than 1000 for an AT/MT vehicle, and less than 200 for a CVT vehicle, irrespective of the travel distance. This indicates that due to improved performance of today's oil filters, foreign objects remaining in lubricating oil in today's vehicles are smaller in size (as a result of larger foreign objects being removed by oil filters).

Next, investigation was made, if lubricating oil in the bearing interior contains foreign objects, of the relationship between the numbers of such foreign objects in the respective particle diameter ranges, and the life of the bearing. The investigation revealed that, while the larger the number of foreign objects having larger particle diameters, the shorter the bearing life tends to be, if the number of foreign objects having particle diameters 50 µm or over is sufficiently small as in the environment in today's transmissions, even if a bearing in such a transmission has no seals, and thus the lubricating oil in the transmission can freely flow into the bearing, the life ratio of the bearing (ratio of the actual life of the bearing to the calculated life) is sufficient for actual use in an automotive transmission (for example, this ratio is about 7 to 10).

Based on this discovery, it can be said that if a sealed bearing used to support a rotary portion of a vehicle drive member such as a transmission or a differential includes seal members capable of preventing foreign objects having particle diameters of more than 50 µm from entering the bearing interior, and if lubricating oil is supplied after being filtered by an oil filter, the bearing life will never be influenced by foreign objects even though foreign objects having particle diameters of 50 µm or less can enter the bearing interior. By configuring the seal members such that foreign objects having particle diameters of 50 µm or less can enter the bearing interior, sufficient amount of lubricating oil can pass through the space between each seal lip and the seal sliding surface, so that in cooperation with the above-described wedge effect, it is possible to create fluid lubricating condition between the seal lip and the seal sliding surface.

For these reasons, as shown in Figs. 2 and 3, the seal lip 151 is designed such that the portions of the protrusions 152 that can be brought into sliding contact with the seal sliding surface 112 have a maximum height h of 0.05 mm. The interference between each protrusion 152 and the seal sliding surface 112 is the highest at the portion of the protrusion 152 having the maximum height h. Since deformation of the protrusions 152 during operation of the bearing is ignorable, the gaps between the seal lip 151 and the seal sliding surface 112 (including the gaps defined by the oil passages 170) in the direction perpendicular to the seal sliding surface 112 are equal to the maximum height h of the protrusions 152, and do not substantially exceed 0.05 mm, at their narrowest portions. Thus, it is possible to substantially prevent foreign objects having particle diameters of more than 50 µm in lubricating oil from passing through the oil passages 170.

Each protrusion 152 has a rounded shape such that the distance between the protrusion 152 and the seal sliding surface 112 decreases from its ends toward its center with respect to the circumferential width w thereof, over the entire radial length of the protrusion 152. The rounded shape of each protrusion 152 allows the protrusion 152 to come into sliding contact with the seal sliding surface 112 along a linear area on an imaginary axial plane Pax which passes through the center of the protrusion 152 with respect to its circumferential width, and on which the rounded shape of the protrusion 152 has its center of curvature.

When the seal sliding surface 112 rotates in the direction of arrow A in Fig. 3 relative to the seal lip 151, lubricating oil in the oil passages 170 is pulled into wedge-shaped gaps between the protrusions 152 and the seal sliding surface 112. Since each wedge-shaped gap has a wedge angle that gradually decreases from its wide end facing the oil passage 170, in which there is lubricating oil to be pulled into the wedge-shaped gap, toward its narrow end, the closer to the linear area (on the imaginary axial plane Pax) along which the protrusion 152 can come into sliding contact with the seal sliding surface 112, the stronger the wedge effect tends to be. This effectively increases the oil pressure of the oil film at the linear area to such an extent that the protrusion 152 is completely separated from the seal sliding surface 112, and the oil film becomes thick at the linear area. This in turn makes it easier to create fluid lubricating condition between the protrusion 152 and the seal sliding surface 112.

If the protrusion 152 is completely separated from the seal sliding surface 112 by oil film, there exists fluid lubricating condition, in which the seal sliding surface 112 slides relative to the protrusion 152 while not in direct contact with the protrusion 152. By forming such oil film between each protrusion 152 and the seal sliding surface 112, fluid lubricating condition is created between the seal lip 151 and the seal sliding surface 112.

In order to easily create such fluid lubricating condition, the stretching force of the seal lip 151, which corresponds to the interference between the seal lip 151 and the seal sliding surface 112, is preferably as small as possible. For this purpose, the base portion of the seal lip 151 at which the seal lip 151 is bent (i.e., deformed) outwardly has preferably as small a wall thickness as possible.

The smaller the maximum height roughness Rz, the smaller the thickness of oil film necessary to create fluid lubricating condition can be. Thus, the seal sliding surface 112 is not subjected to shot peening so that the maximum height roughness Rz is less than 1 µm. The maximum height roughness Rz herein used refers to what is defined under JIS B0601: 2013.

The smaller the distances d between the circumferentially adjacent pairs of protrusions 152, i.e., the larger the number of the protrusions 152, the larger number of protrusions 152 any point of the seal sliding surface 112 passes when the seal sliding surface 112 rotates once relative to the seal lip 151. This makes it easier to form a continuous oil film over the entire circumference of the seal sliding surface 112, and to eliminate any portion where oil is not subjected to the wedge effect between each protrusion 152 and the seal sliding surface 112, so that fluid lubricating condition can be created more easily.

The larger the rounded shape of each protrusion 152 (i.e., the radius of curvature of the surface 154 of the protrusion 152), the more easily the wedge effect is created.

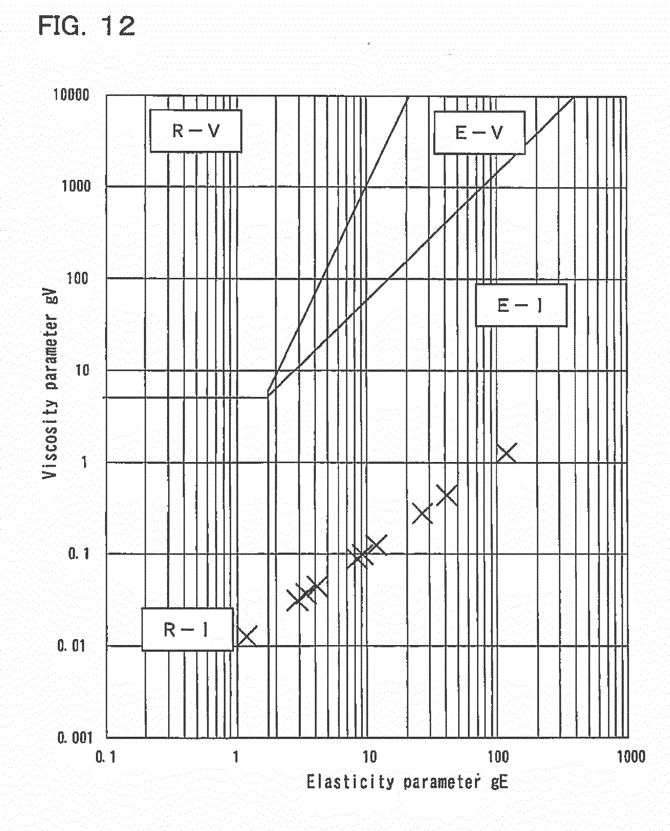

The inventors of the present application calculated the theoretical oil film thickness between the protrusions 152 and the seal sliding surface 112 when the heights h of the protrusions 152 are 0.05mm, the intervals d between the protrusions 152 are not less than 0.3 mm and not more than 2.6 mm, the circumferential widths w of the protrusions 152 are not less than 0.2 mm and not more than 0.7 mm, and the rounded shape of the protrusions 152 is not less than 0.15 mm and less than 1.0 mm, with the peripheral speed of the seal sliding surface 112 (i.e., the speed at which the seal sliding surface 112 rotates in the circumferential direction relative to the seal lip 151) within the range of 0.02-20.2 m/s. In this calculation, "CVTF" was simulated, in which a pulley and a belt of a CVT were lubricated, when the oil temperature was 30°C and 120°C. The calculation results revealed that under these use conditions, in a lubrication region chart for line contact based on viscosity parameter gᵥ and elasticity parameter gₑ, which are non-dimensional numbers determined by Greenwood and Johnson, lubricating oil is distributed in either one of the equiviscous-rigid body region (R-I lubricating mode) and the equiviscous-elastic body region (E-I mode, soft EHL), which means fluid lubricating condition. Fig. 12 shows the distribution of the calculation results in the above-described lubrication region chart.

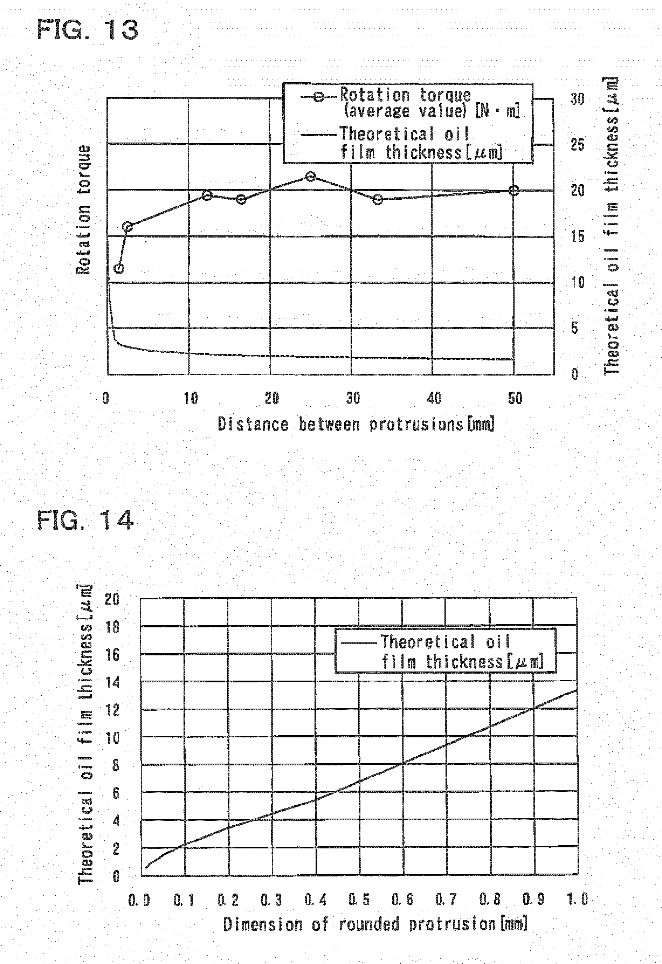

The inventors of the present application discovered, by calculation, the relationship between the distance d between the protrusions 152, shown in Figs. 3 and 4, and the theoretical oil film thickness between the protrusions 152 and the seal sliding surface 112. The inventors of the present application further discovered, by calculation, the relationship between the rounded shape of the protrusions 152 and the theoretical oil film thickness between the protrusions 152 and the seal sliding surface 112. The theoretical oil film thickness was calculated using the minimum film thickness calculating equation of Martin for the R-I mode, or using the minimum film thickness calculating equation of Herrebrugh for the E-I mode. The inventors of the present application further discovered, by experiment, the relationship between the distance d between the protrusions 152 and the rotation torque of the sealed bearing 100. Fig. 13 shows the relationship between the distance d between the protrusions 152 and the theoretical oil film thickness and between the distance d and the bearing rotation torque. Fig. 14 shows the relationship between the dimension of the rounded shape of the protrusions 152 and the theoretical oil film thickness. If the oil film between the protrusions 152 and the seal sliding surface 112 is too thin, the friction coefficient µ tends to be high. If too thick, it may become difficult to effectively prevent entry of foreign objects. Taking these factors into consideration, an optimum oil film thickness should be sought within the range larger than the maximum height roughness Rz.

Fig. 13 shows that, theoretically, if the distance d between the protrusions 152 is 2.6 mm, an approximately 3-µm-thick (i.e., way thicker than the maximum height roughness Rz of less than 1 pm) oil film is formed between the protrusions 152 and the seal sliding surface 112, and where the distance d is smaller than 2.6 mm, the oil film thickness tends to increase as the distance d decreases. Fig. 13 further shows that where the distance is 2.6 mm or less, the bearing rotation torque (i.e., the seal torque) tends to decrease as the distance d decreases. The distance d between the protrusions 152 may be therefore 2.6 mm or less. If the distance d between the protrusions 152 is less than 0.3 mm, it becomes difficult to form the seal lip 151 using a mold. Thus, the distance d is preferably 0.3 mm or over.

Fig. 14 shows that, theoretically, if the radius of curvature of the rounded shape of the protrusions 152 is 0.15 mm, an approximately 3-µm-thick oil film is formed. Thus, if the height h of the protrusions 152 is 0.05 mm, and considering the fact that the seal lip is formed in a mold, the radius of curvature of the rounded shape of the protrusions 152 is preferably not less than 0.15 mm and less than 1.0 mm. Also, since the circumferential width w of the protrusions 152 is dependent upon the rounded shape of the protrusions 152, if the height h of the protrusions 152 is 0.05 mm, the radius of curvature of the rounded shape of the protrusions 152 is more preferably not less than 0.2 mm and not more than 0.7 mm.

In view of the above calculation results, in the first embodiment, the height h of the protrusions 152, shown in Figs. 2-4, is 0.05 mm; the distance d between the protrusions 152 is not less than 0.3 mm and not more than 2.6 mm, the circumferential width w of the protrusions 152 is not less than 0.2 mm and not more than 0.7 mm; and the radius of curvature of the rounded shape of the protrusions 152 is not less than 0.15 mm and less than 1.0 mm. By providing the seal lip 151 with such protrusions 152, it is possible to create fluid lubricating condition between the seal lip 151 and the seal sliding surface 112 while the seal sliding surface 112 is rotating at a peripheral speed of 0.2 m/s or over. In this arrangement, while the peripheral speed of the seal sliding surface 112 is less than 0.2 m/s, boundary lubricating condition prevails between the protrusions 152 and the seal sliding surface 112. However, since a bearing in a vehicle transmission quickly reaches the peripheral speed of 0.2 m/s once it begins to rotate, fluid lubricating condition is created between the seal lip 151 and the seal sliding surface 112 substantially over the entire period of operation of the bearing.

With the sealed bearing 100 of the first embodiment, the seal members 150 prevent entry of foreign objects having such large particle diameters as to detrimentally affect the life of the bearing, into the bearing interior space, while at the same time, fluid lubrication minimizes the friction coefficient µ due to sliding movement between the seal lip 151 and the seal sliding surface 112, thereby markedly reducing seal torque, and thus the rotation torque of the bearing (see Figs. 1 and 3).

With the sealed bearing 100 of the first embodiment, even while the bearing is being rotated at peripheral speeds at which conventional sealed bearings would suffer from such problems as wear of the seal lips, and heat buildup due to sliding movement between the seal lip and the seal sliding surface (e.g., at 30 m/s and over), since fluid lubricating condition keeps the seal lip 151 and the seal sliding surface 112 out of direct contact with each other, it is possible to keep the seal lip 151 practically free of wear, and to reduce heat buildup due to sliding movement between the seal lip and the seal sliding surface. This in turn makes it possible to operate the sealed bearing 100 of the first embodiment at speeds that were not attainable with conventional sealed bearings.

With the sealed bearing 100 of the first embodiment, since the protrusions 152 have a rounded shape, they will never be bent in the circumferential direction even if rubbed against the seal sliding surface 112 when the seal member 150 is mounted to the outer race 120, so that the protrusions reliably maintain the ability to keep the seal torque low. If, on the other hand, the protrusions have e.g., angular ridges, the individual protrusions could be bent in either of the opposite circumferential directions by being rubbed against the seal sliding surface when mounting the seal member. Thus, it is extremely difficult to mount the seal member such that the protrusions are bent in the same direction in which wedge-shaped gaps are formed on the proper sides of the respective protrusions with respect to the direction in which the seal sliding surface rotates relative to the protrusions. As a result, no sufficient wedge effects are obtained at portions of the seal lip where there are protrusions that have been bent in the wrong direction, so that the protrusions as a whole will be unable to sufficiently reduce the seal torque.

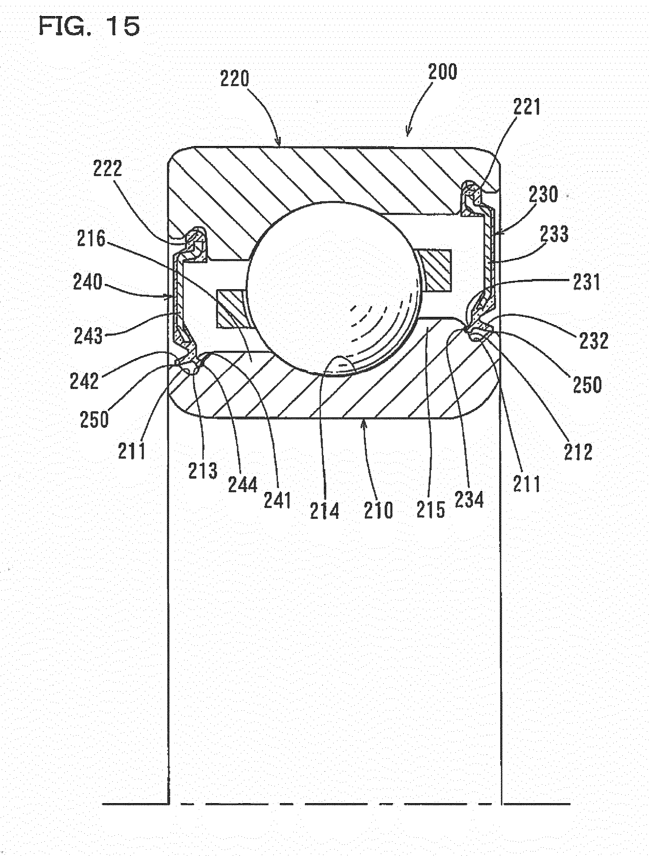

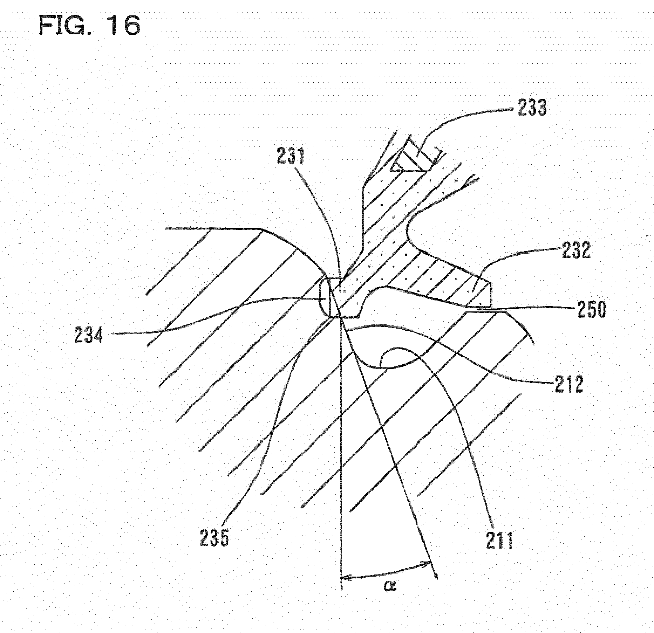

Figs. 15 and 16 show the sealed bearing 200 of the second embodiment. The inner race 210 of this sealed bearing 200 is formed with seal grooves 211 extending the entire circumference thereof. The bearing 200 has a bearing interior space defined between the inner race 210 and the outer race 220, and having the respective ends thereof sealed by seal members 230 and 240 retained in respective seal grooves 221 and 222 of the outer race 220.

Each seal member 230, 240 includes a seal lip 231, 241 which is an axial seal lip, and an outer lip 232, 242 located outwardly of the seal lip 231, 241. The seal lip 231, 241 and the outer lip 232, 242 branch from a base portion attached to the metal core 233, 243.

As used herein, an axial seal lip refers to a seal lip fitted, with axial interference, to a seal sliding surface extending parallel to, or at an acute angle of less than 45 degrees relative to, the radial direction, to provide a seal between the seal lip and the seal sliding surface.

Each seal groove 211 has a side surface as a seal sliding surface 212, 213 which gradually radially expands from the bottom of the seal groove 211 toward the raceway groove 214, and which is configured to slide relative to the seal lip 231, 241 of the corresponding seal member 230, 240. The seal sliding surface is inclined at an acute angle α of less than 45 degrees to the radial direction.

The inner race 210 has a pair of shoulders 215 and 216 on the respective sides of the raceway groove 214, of which the load-bearing shoulder 215 (on the right of Fig. 15), on which axial loads are applied, is higher in height than the other, non-load-bearing shoulder 216 (on the left of Fig. 15). The non-load-bearing shoulder 216 is substantially as high as the shoulders of ordinary deep groove ball bearings. Thus, the sealed bearing 200 has a higher axial load bearing capacity than deep groove ball bearings, while its torque is as low as that of deep groove ball bearings.

The seal sliding surfaces 212 and 213 are formed on the respective shoulders 215 and 216. Due to a large difference in outer diameter between the load-bearing shoulder 215 and the non-load-bearing shoulder 216, there is a difference in diameter between the seal sliding surface 212 on the load-bearing shoulder 215 and the seal sliding surface 213 on the non-load-bearing shoulder 216. In particular, the seal sliding surface 212, on the right of Fig. 15, is larger in diameter than the seal sliding surface 213, on the left of Fig. 15. This means that during operation of the bearing, the peripheral speed of the right seal sliding surface 212 is higher than that of the left seal sliding surface 213.

Also, during operation of the bearing, due to the difference in diameter between the shoulders 215 and 216, a pumping effect is produced that tends to move lubricating oil in the bearing interior space from left to right in Fig. 15.

The protrusions 234, 244 of each seal lip 231, 241 are formed during vulcanization to extend in the radial direction. In Figs. 15 and 16, the seal lips 231 and 241 are shown in the unstressed state to illustrate the interference between the protrusions 234, 244 and the seal sliding surface 212, 213. When the protrusions 234, 244 of each seal lip 231, 241 are axially pressed against the seal sliding surface 212, 213, the seal lip 231, 241 is inclined to substantially extend along the seal sliding surface 212, 213, so that the above-mentioned oil passages and wedge-shaped gaps are formed between the protrusions 234, 244 and the seal sliding surface 212, 213 (see

Fig. 3).

As shown in Fig. 16, the heights of the protrusions 234 decrease gradually toward the distal edge 235 of the seal lip 231 such that the heights are substantially zero at the distal edge 235 of the seal lip 231. Since the heights of the protrusions 234 decrease gradually toward the distal edge 235 of the seal lip 231, the undulation along the parting line for forming the protrusions 234 is less steep, so that burrs are less likely to be produced at the distal edge 235 of the seal lip 231. The protrusions 244, see Fig. 15, are identical in shape to the protrusions 234.

As shown in Figs. 15 and 16, a labyrinth gap 250 is defined between the outer lip 232 and the outer wall portion of the seal groove 211. The labyrinth gap 250 makes it difficult for foreign objects having particle diameters larger than 50 µm to enter the seal groove 211 from outside.

The number of the protrusions 234 on the seal member 230, on the right of Fig. 15, differs from the number of the protrusions 244 on the seal member 240, on the left. Also, the protrusions 234 on the right seal member 230 are arranged at different circumferential angular pitches than the protrusions 244 on the left seal member 240. The purpose of these differences is to allow oil films of the same thickness to be formed on both sides of the bearing in spite of the fact that the lubricating condition between the right seal member 230 and the seal sliding surface 212 differs from the lubricating condition between the left seal member 240 and the seal sliding surface 213 due to the above-described difference in peripheral speed and pumping effect, and further to prevent the formation of oil films so thick as to allow entry of foreign objects having particle diameters larger than 50 µm into the bearing. Thus, with the sealed bearing 200 of the second embodiment, it is possible to reduce torque due to suitable fluid lubricating condition created between the right (in Fig. 15) seal member 230 and the seal sliding surface 212 and between the left (in Fig. 15) seal member 240 and the seal sliding surface 213, and also to reduce the number of foreign objects that enter the bearing.

With the sealed bearing 200 of the second embodiment, since the labyrinth gaps 250 make it difficult for foreign objects to reach the seal lips 231 and 241, it is possible to reduce the number of foreign objects that enter the bearing without increasing torque. Generally speaking, compared with a radial seal lip, an axial seal lip tends to move a large distance in the axial direction during operation of the bearing, so that a large gap could form between the axial seal lip and the seal sliding surface when the movement of the axial seal lip becomes maximum. Therefore, compared with radial seal lips, axial seal lips are not effective in preventing entry of foreign objects into the bearing. In the second embodiment, the sealing effect of the labyrinth gaps 250 compensates for such disadvantage of the (axial) seal lips 231 and 241, so that the life of the sealed bearing 200 of this embodiment is as long as that of the bearing of the first embodiment, in which radial seal lips are used.

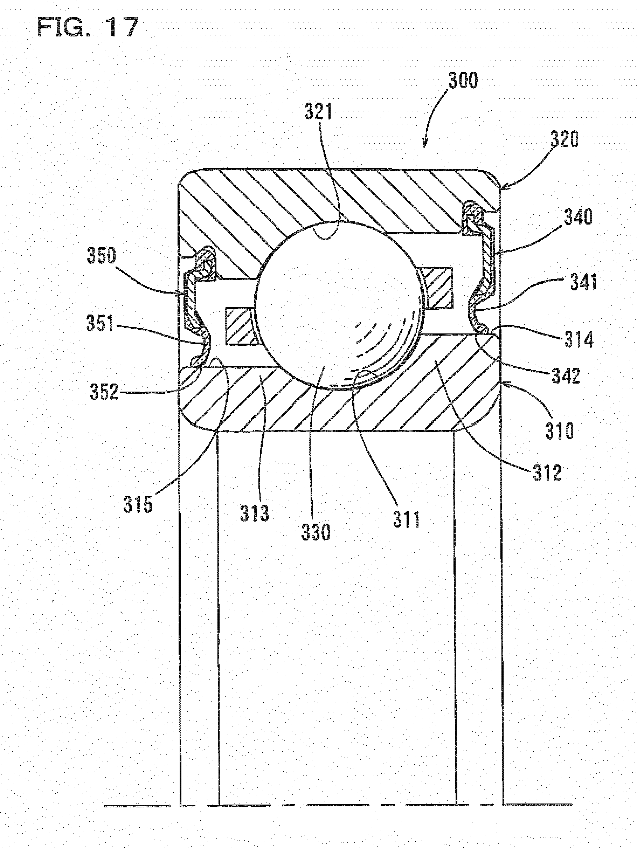

Fig. 17 shows a sealed bearing 300 of the third embodiment, which is the same as the second embodiment in that it is a ball bearing including an inner race 310 having a raceway groove 311, an outer race 320 having a raceway groove 321, a plurality of balls 330 disposed between the raceway grooves 311 and 321, and two seal members 340 and 350 sealing the respective ends of the bearing interior space defined between the inner race 310 and the outer race 320, and that the inner race 310 has a pair of shoulders 312 and 313 on the respective sides of the raceway groove 311, of which the load-bearing shoulder 312, on which axial loads are applied, is higher in height than the other, non-load-bearing shoulder 313. On the other hand, this sealed bearing 300 is the same as the first embodiment in that the seal members 340 and 350 include seal lips 341 and 351 in the form of radial seal lips.

The inner race 310 has no seal grooves, and has, instead, a cylindrical seal sliding surface 314 defining the radially outer surface of the load-bearing shoulder 312, and a cylindrical seal sliding surface 315 defining the radially outer surface of the non-load-bearing shoulder 313. The difference in diameter between the right (in Fig. 17) seal sliding surface 314 and the left (in Fig. 17) seal sliding surface 315 is substantially equal to the corresponding difference in diameter in the second embodiment, so that the difference in peripheral speed is also substantially equal to the corresponding difference in peripheral speed in the second embodiment. As a result, the difference in number, and the difference in circumferential angular pitches, between the protrusions 342 on the right (in Fig. 17) seal member 340 and the protrusions 352 on the left (in Fig. 17) seal member 350 are also substantially the same as the corresponding differences in number and circumferential angular pitches in the second embodiment. Thus, with the sealed bearing 300 of the third embodiment too, these differences allow oil films of the same and optimum thickness to be formed between the seal member 340 and the seal sliding surface 314 and between the seal member 350 and the seal sliding surface 315, thereby reducing torque due to fluid lubricating condition, as well as the number of foreign objects that enter the bearing.

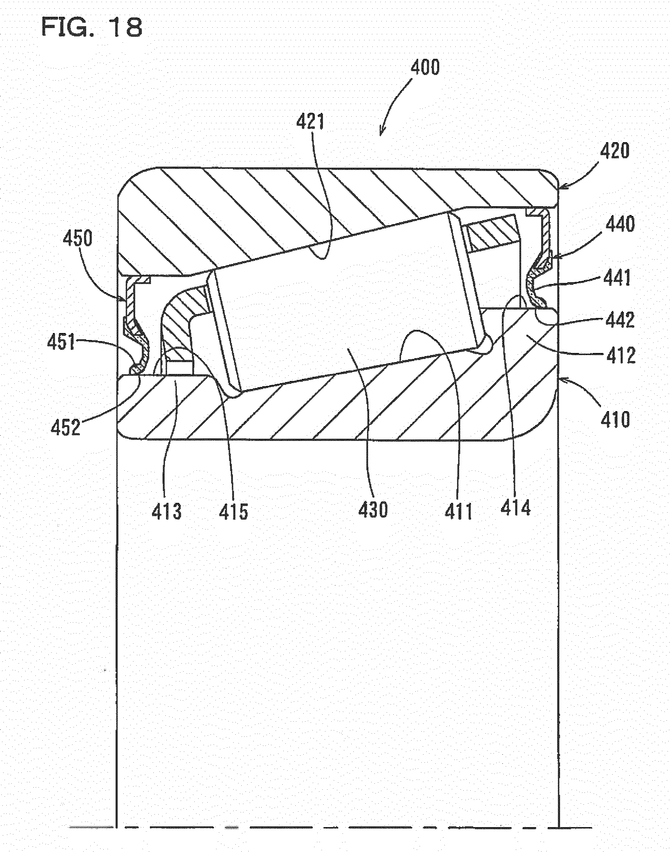

Fig. 18 shows a sealed bearing 400 of the fourth embodiment, which is a tapered roller bearing including an inner race 410 having a raceway surface 411, a large flange 412, and a small flange 413; an outer race 420 having a raceway surface 421; a plurality of tapered rollers 430 disposed between the raceway surfaces 411 and 421 of the inner race 410 and the outer race 420; and two seal members 440 and 450 sealing the respective ends of the bearing interior space defined between the inner race 410 and the outer race 420.

During operation of the bearing, the large flange 412 guides the large-diameter end surfaces of the tapered rollers 430, and receives axial loads. The small flange 413 is smaller in outer diameter than the large flange 412, and supports the small-diameter end surfaces of the tapered rollers 430, thereby preventing separation of the tapered rollers 430 from the inner race 410.

The outer race 420 has no seal grooves, and the metal cores of the seal members 440 and 450 are press-fitted in respective ends of the inner periphery of the outer race 420.

The seal members 440 and 450 include seal lips 441 and 442 in the form of radial seal lips. The inner race 410 has a cylindrical seal sliding surface 414 defining the radially outer surface of the large flange 412, and configured to slide relative to the seal lip 441 of the right (in Fig. 18) seal member 440 in the circumferential direction. The inner race 410 further includes a cylindrical seal sliding surface 415 defining the radially outer surface of the small flange 413, and configured to slide relative to the seal lip 451 of the left (in Fig. 18) seal member 450 in the circumferential direction. Since there is a large difference in diameter between the seal sliding surface 414 on the large flange 412 and the seal sliding surface 415 on the small flange 413, during operation of the bearing, the peripheral speed of the right (in Fig. 18) seal sliding surface 414 is higher than the peripheral speed of the left (in Fig. 18) seal sliding surface 415. Also, during operation of the bearing, due to the above-mentioned difference in diameter, a pumping effect is produced that tends to move lubricating oil in the bearing interior space from left to right in Fig. 18.

The protrusions 442 and 452 on the seal lips 441 and 451 define wedge-shaped gaps and oil passages as shown in Fig. 3, which in turn make it possible to create fluid lubricating condition between the seal lip 441 and the seal sliding surface 414 and between the seal lip 451 and the seal sliding surface 415.

The number of the protrusions 442 on the right (in Fig. 18) seal member 440 differs from the number of the protrusions 442 on the left (in Fig. 18) seal member 450. Also, the protrusions 442 on the right (in Fig. 18) seal member 440 are arranged at different circumferential angular pitches than the protrusions 442 on the left (in Fig. 18) seal member 450. The purpose of these differences is to allow oil films of the same and optimum thickness to be formed on both sides of the bearing in spite of the fact that the lubricating condition between the right seal member 440 and the seal sliding surface 414 differs from the lubricating condition between the left seal member 450 and the seal sliding surface 415 due to the above-described difference in peripheral speed and pumping effect.

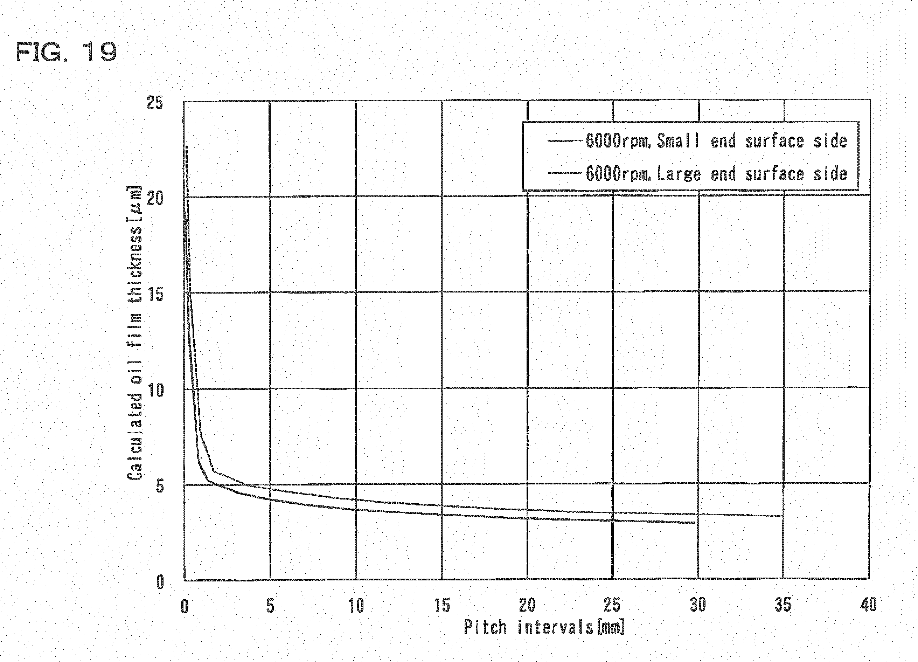

Fig. 19 shows the relationship between the intervals d between the protrusions 442 and between the protrusions 452, and the theoretical oil film thickness. According to the results of calculation, on the side of the small flange 413 (referred to as the "small end surface side" in Fig. 19), when the intervals d between the protrusions 452 (referred to as "pitch intervals" in Fig. 19) are 6.4 mm, the theoretical oil film thickness is 4.0 pm, while on the side of the large flange 412 (referred to as the "large end surface side" in Fig. 19), when the intervals d between the protrusions 442 (referred to as "pitch intervals" in Fig. 19) are 11.5 mm, the theoretical oil film thickness is 4.0 µm. As is apparent from these calculation results, it is possible to form oil films of the same or substantially same thickness between the seal lip 441 and the seal sliding surface 414 (shown in Fig. 18), and between the seal lip 451 and the seal sliding surface 415 by determining the numbers and the circumferential angular pitches of the protrusions on the respective sides of the bearing, which determine the intervals d between the protrusions, such that these numbers and the circumferential angular pitches differ from each other.

If, due to too thick oil film being formed, the gap between the seal lip 441 and the seal sliding surface 414 or between the seal lip 451 and the seal sliding surface 415 is way larger than 0.05 mm, foreign objects having particle diameters larger than 50 µm tend to enter the bearing. To prevent this problem, on the respective sides of the bearing, the numbers of protrusions and the circumferential angular pitches of the protrusions, which are parameters that determine the intervals d between the protrusions, are determined independently of each other such that oil films having thicknesses equal to each other and optimum in preventing the above problem are formed between the right (in Fig. 18) seal member 440 and the seal sliding surface 414 and between the left (in Fig. 18) seal member 450 and the seal sliding surface 415.

Thus, with the sealed bearing 400 of the fourth embodiment too, as with the second and third embodiments, optimum fluid lubricating condition is created between the right (in Fig. 18) seal member 440 and the seal sliding surface 414 and between the left (in Fig. 18) seal member 450 and the seal sliding surface 415, which allows reduced torque, while reducing the amount of foreign objects that enter the bearing.

Since tapered roller bearings are larger in torque than ball bearings, some conventional tapered roller bearings do not include seal members. However, a large amount of lubricant tends to flow into a tapered roller bearing having no seal members due to a pumping effect inherent to its shape, so that the agitating resistance of the lubricant increases. Also, since foreign objects flow into the bearing together with the lubricant, it was sometimes necessary to subject both the inner and outer races of a tapered roller bearing to hardening treatment such as special heat treatment to keep the raceway surfaces free of scratches due to foreign objects. In contrast, the sealed tapered roller bearing 400 includes the seal members 440 and 450, and thus is free of the above problems of tapered roller bearings having no seal members. Still, its torque is low due to the above-described fluid lubricating condition. The seal members 440 and 460 reduce the amount of lubricant flowing into the bearing due to the pumping effect, and thus reduce the agitating resistance of lubricant. This reduces the torque of the tapered roller bearing. Also, since the seal members 440 and 450 prevent foreign objects from entering the bearing together with the lubricant, no special treatment of the inner and outer races 410 and 420 is necessary. This reduces the cost of the bearing.

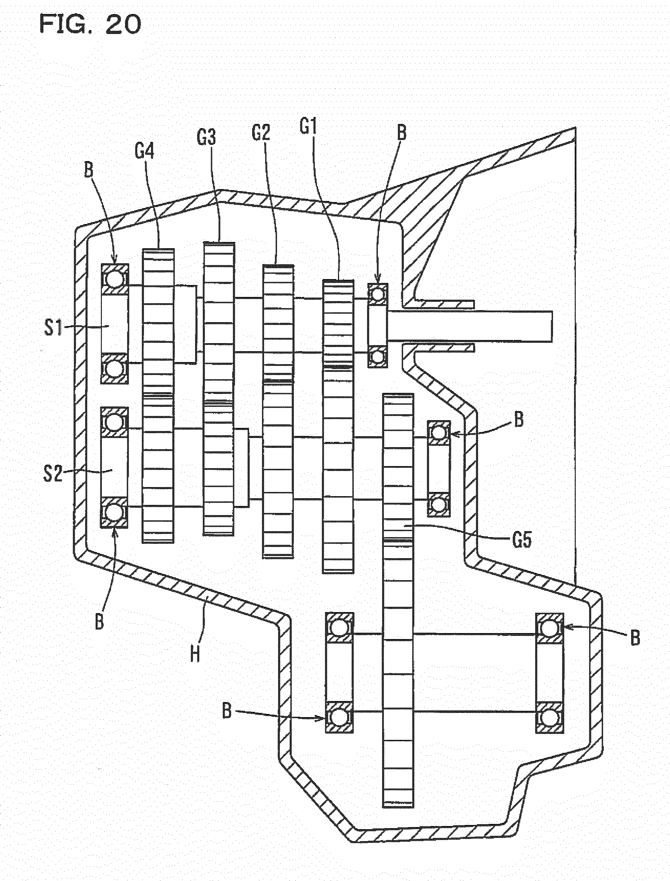

Fig. 20 shows sealed (rolling) bearings according to the present invention which are used to support rotating portions of a vehicle transmission. The transmission shown is a multi-speed transmission, i.e., a transmission having multiple speed ratios. Its rotating portions (such as an input shaft S1 and an output shaft S2) are rotatably supported by sealed bearings B comprising the sealed bearings according to any of the above-described embodiments. The transmission shown includes the input shaft S1, to which the rotation of the engine of the vehicle is transmitted, the output shaft S2, which extends parallel to the input shaft S1, a plurality of gear trains G1-G4 through which the rotation of the input shaft S1 is transmitted to the output shaft S2, and clutches, not shown, mounted between the respective gear trains G1-G4 and the input shaft S1 or the output shaft S2. By selectively engaging the respective clutches, the rotation of the input shaft S1 is transmitted to the output shaft S2 through the respective gear trains G1-G4 in different reduction ratios. The rotation of the output shaft S2 transmits to an output gear G5, and then e.g., to a differential. The input shaft S1 and the output shaft S2 are, as mentioned above, rotatably supported by the sealed bearings B. The sealed bearings B are arranged in the transmission such that their sides are splashed with lubricating oil splashed due to rotation of the gears or injected from nozzles (not shown) in the housing H.

In any of the above embodiments, the protrusions have rounded shapes, but their shapes are not limited to rounded shapes provided fluid lubricating condition can be created between the protrusions and the seal sliding surface while the relative peripheral speed therebetween is higher than a predetermined value. For example, the protrusions may have chamfers such as rounded chamfers or flat chamfers.

In any of the above embodiments, a plurality of protrusions are arranged at equal intervals in the circumferential direction, but instead, a plurality of protrusions may be arranged at unequal intervals in the circumferential direction, or a single protrusion may be used located at one circumferential position. Oil passages are defined by such a single protrusion, so that such a single protrusion serves to reduce the seal torque.

In any of the above embodiments, the seal member comprises a metal core and a vulcanized rubber section, but the seal member may comprise a single material, provided its seal lip can be fitted with interference fit. For example, the seal member may entirely comprise a rubber or a resin.

In any of the above embodiments, the bearing is a radial bearing of which the inner race is rotatable, but may be a thrust bearing of which the outer race is rotatable.

The embodiments illustrated above are mere examples and not intended to restrict the invention. The invention is defined by appended claims.

### DESCRIPTION OF THE REFERENCE SIGNS

100, 200, 300, 400, B. Sealed bearing
110, 210, 310, 410. Inner race
111, 121, 314, 411, 421. Raceway groove
112, 212, 213, 314, 315, 414, 415. Seal sliding surface
120, 220, 320, 420. Outer race
122, 211, 221, 222. Seal groove
140. Rolling element
150, 230, 240, 340, 350, 440, 450. Seal member
151, 231, 241, 341, 351, 441, 451. Seal lip
152, 234, 244, 342, 352, 442, 452. Protrusion
153, 235. Distal edge
154. Surface
155. Surface
156, 233, 243. Metal core
157. Vulcanized rubber section
160. Bearing interior space
170. Oil passage
215, 216, 312, 313. Shoulder
232, 242. Outer lip
250. Labyrinth gap
330. Ball
411, 421. Raceway surface
430. Tapered roller
S1. Input shaft (rotary portion)
S2. Output shaft (Rotary portion)

## Claims

1. A sealed bearing defining a bearing interior space (160), the sealed bearing comprising:
a seal member (150) separating the bearing interior space (160) from an exterior of the bearing, the seal member (150) including a seal lip (151);
a seal sliding surface (112) configured to slide relative to the seal lip (151) in a circumferential direction; and
a plurality of protrusions (152) formed on circumferential portions of the seal lip (151) and arranged at equal intervals over the entire circumference, wherein the seal lip (151) contacts the seal sliding surface (112) only at the protrusions (152), and the protrusions (152) defining oil passages (170) extending between the seal sliding surface (112) and the seal lip (151), the oil passages (170) communicating with the bearing interior space (160) and the exterior of the bearing;
wherein the protrusions (152) are shaped and arranged such that fluid lubricating condition can be created between the seal lip (151) and the seal sliding surface (112),
the seal lip (151) has a distal edge (153) that defines a radially inner diameter of the seal lip (151) when the seal member (150) is in a natural state and not stressed by any external force, wherein
the plurality of protrusions is formed on a side of the seal lip (151), which faces the bearing interior space (160) with respect to the distal edge, and
each of the protrusions (152) has a height that gradually decreases toward the distal edge (153) of the seal lip (151).

2. The sealed bearing of claim 1, wherein there is a flat surface (155) between the distal edge (153) of the seal lip (151) and each of the protrusions (152).

3. The sealed bearing of any of claims 1-2, wherein wedge-shaped gaps are defined between each of the plurality of protrusions (152) and the seal sliding surface (112) such that each of the wedge-shaped gaps is larger on a side of a corresponding one of the oil passages (170) than on a side of the protrusion (152),
wherein the fluid lubricating condition is a state in which the seal lip (151) and the seal sliding surface (112) are completely separated from each other, and the protrusions (152) are shaped and arranged such that the fluid lubricating condition can be created by oil films of lubricating oil which is, as the bearing rotates, pulled, from the oil passages (170), into spaces between the respective protrusions (152) and the seal sliding surface (112), and
the protrusions (152) are shaped so as to be capable of coming into sliding contact with the seal sliding surface (112) along linear areas such that a wedge effect that creates the fluid lubricating condition can be created while a relative peripheral speed between the protrusions (152) and the seal sliding surface (112) is higher than a predetermined level.

4. The sealed bearing of claim 3, wherein each of the plurality of protrusions (152) extends in a direction perpendicular to the circumferential direction, and has a rounded shape such that a distance between the protrusion (152) and the seal sliding surface (112) gradually decreases from respective ends of the protrusion (152) toward a center of the protrusion (152), with respect to a circumferential width of the protrusion (152).

5. The sealed bearing of any of claims 1-4, wherein the seal member (150) includes a metal core (156), and the seal lip (152) is formed of a vulcanized rubber section attached to at least a radially inner portion of the metal core (156).

6. The sealed bearing of any of claims 1-5, wherein the sealed bearing supports at least one rotary portion (S1, S2) of one of a transmission and a differential, of a vehicle.

## Patentansprüche

1. Gedichtetes Lager, das einen Lager-Innenraum (160) aufweist, wobei das gedichtete Lager umfasst:
ein Dichtungselement (150), das den Lager-Innenraum (160) von einer Außenseite des Lagers trennt, wobei das Dichtungselement (150) eine Dichtlippe (151) enthält;
eine Dichtungs-Gleitfläche (112), die so ausgeführt ist, dass sie relativ zu der Dichtlippe (151) in einer Umfangsrichtung gleitet; sowie
eine Vielzahl von Vorsprüngen (152), die an Umfangsabschnitten der Dichtlippe (151) ausgebildet und in gleichen Abständen über den gesamten Umfang angeordnet sind, wobei die Dichtlippe (151) nur an den Vorsprüngen (152) mit der Dichtungs-Gleitfläche (112) in Kontakt kommt und die Vorsprünge (152) Ölkanäle (170) bilden, die sich zwischen der Dichtungs-Gleitfläche (112) und der Dichtlippe (151) erstrecken, und die Ölkanäle (170) mit dem Lager-Innenraum (160) und der Außenseite des Lagers in Verbindung stehen;
wobei die Vorsprünge (152) so geformt und angeordnet sind, dass zwischen der Dichtlippe (151) und der Dichtungs-Gleitfläche (112) Fluidschmierungs-Zustand hergestellt werden kann,
die Dichtlippe (151) einen vorderen Rand (153) aufweist, der einen radialen Innendurchmesser der Dichtlippe (151) bildet, wenn sich das Dichtungselement (150) in einem freien Zustand befindet und nicht durch eine Kraft von außen belastet wird, wobei
die Vielzahl von Vorsprüngen an einer Seite der Dichtlippe (151) ausgebildet ist, die in Bezug auf den vorderen Rand dem Lager-Innenraum (160) zugewandt ist, und
jeder der Vorsprünge (152) eine Höhe hat, die in Richtung des vorderen Randes (153) der Dichtlippe (151) allmählich abnimmt.

2. Gedichtetes Lager nach Anspruch 1, wobei sich zwischen dem vorderen Rand (153) der Dichtlippe (151) und jedem der Vorsprünge (152) eine ebene Fläche (155) befindet.

3. Gedichtetes Lager nach einem der Ansprüche 1 - 2, wobei zwischen jedem der Vielzahl von Vorsprüngen (152) und der Dichtungs-Gleitfläche (112) keilförmige Spalte so ausgebildet sind, dass jeder der keilförmigen Spalte an einer Seite eines entsprechenden der Ölkanäle (170) größer ist als an einer Seite des Vorsprungs (152),
wobei der Fluidschmierungs-Zustand ein Zustand ist, in dem die Dichtlippe (151) und die Dichtungs-Gleitfläche (112) vollständig voneinander getrennt sind, und die Vorsprünge (152) so geformt und angeordnet sind, dass der Fluidschmierungs-Zustand durch Ölfilme aus Schmieröl erzeugt werden kann, das bei Drehung des Lagers aus den Ölkanälen (170) in Räume zwischen den jeweiligen Vorsprüngen (152) und der Dichtungs-Gleitfläche (112) gezogen wird, und
die Vorsprünge (152) so geformt sind, dass sie in der Lage sind, mit der Dichtungs-Gleitfläche (112) entlang linearer Bereiche so in Gleitkontakt zu kommen, dass ein Keileffekt, der den Fluidschmierungs-Zustand bewirkt, erzeugt werden kann, während eine relative Umfangsgeschwindigkeit zwischen den Vorsprüngen (152) und der Dichtungs-Gleitfläche (112) über einem vorgegebenen Grad liegt.

4. Gedichtetes Lager nach Anspruch 3, wobei sich jeder der Vielzahl von Vorsprüngen (152) in einer Richtung senkrecht zu der Umfangsrichtung erstreckt und eine abgerundete Form hat, so dass ein Abstand zwischen dem Vorsprung (152) und der Dichtungs-Gleitfläche (112) von jeweiligen Enden des Vorsprungs (152) zu einer Mitte des Vorsprungs (152) hin in Bezug auf eine Umfangsbreite des Vorsprungs (152) allmählich abnimmt.

5. Gedichtetes Lager nach einem der Ansprüche 1 - 4, wobei das Dichtungselement (150) einen Metallkern (156) enthält und die Dichtlippe (152) aus einem vulkanisierten Gummiprofil besteht, das an wenigstens einem radial innenliegenden Abschnitt des Metallkems (156) angebracht ist.

6. Gedichtetes Lager nach einem der Ansprüche 1 - 5, wobei das gedichtete Lager wenigstens einen rotierenden Abschnitt (S1, S2) eines Getriebes oder eines Differentials eines Fahrzeugs lagert.

## Revendications

1. Palier étanche définissant un espace intérieur de palier (160), le palier étanche comprenant :
un élément d'étanchéité (150) séparant l'espace intérieur de palier (160) d'un extérieur du palier, l'élément d'étanchéité (150) comportant une lèvre d'étanchéité (151);
une surface coulissante d'étanchéité (112) configurée pour coulisser par rapport à la lèvre d'étanchéité (151) dans une direction circonférentielle ; et
une pluralité de saillies (152) formées sur des parties circonférentielles de la lèvre d'étanchéité (151) et agencées à intervalles égaux sur toute la circonférence, où la lèvre d'étanchéité (151) entre en contact avec la surface coulissante d'étanchéité (112) uniquement au niveau des saillies (152), et les saillies (152) définissant des passages d'huile (170) s'étendant entre la surface coulissante d'étanchéité (112) et la lèvre d'étanchéité (151), les passages d'huile (170) communiquant avec l'espace intérieur de palier (160) et l'extérieur du palier ;
dans lequel les saillies (152) sont façonnées et agencées de sorte qu'une condition de lubrification par fluide puisse être créée entre la lèvre d'étanchéité (151) et la surface coulissante d'étanchéité (112),
la lèvre d'étanchéité (151) a un bord distal (153) qui définit un diamètre radialement interne de la lèvre d'étanchéité (151) lorsque l'élément d'étanchéité (150) est dans un état naturel et n'est sollicité par aucune force externe, où
la pluralité de saillies est formée sur un côté de la lèvre d'étanchéité (151), qui fait face à l'espace intérieur de palier (160) par rapport au bord distal, et
chacune des saillies (152) a une hauteur qui diminue progressivement vers le bord distal (153) de la lèvre d'étanchéité (151).

2. Palier étanche de la revendication 1, dans lequel il existe une surface plate (155) entre le bord distal (153) de la lèvre d'étanchéité (151) et chacune des saillies (152).

3. Palier étanche de l'une des revendications 1 et 2, dans lequel des écarts en forme de coin sont définis entre chacune de la pluralité de saillies (152) et la surface coulissante d'étanchéité (112) de sorte que chacun des écarts en forme de coin soit plus grand sur un côté d'un passage correspondant des passages d'huile (170) que sur un côté de la saillie (152),
dans lequel la condition de lubrification par fluide est un état dans lequel la lèvre d'étanchéité (151) et la surface coulissante d'étanchéité (112) sont complètement séparées l'une de l'autre, et les saillies (152) sont façonnées et agencées de sorte que la condition de lubrification par fluide puisse être créée par des films d'huile d'une huile lubrifiante qui, à mesure que le palier tourne, est extraite, à partir des passages d'huile (170), dans des espaces entre les saillies respectives (152) et la surface coulissante d'étanchéité (112), et
les saillies (152) sont façonnées de manière à pouvoir entrer en contact coulissant avec la surface coulissante d'étanchéité (112) le long de zones linéaires de sorte qu'un effet de coin qui crée la condition de lubrification par fluide puisse être créé tandis qu'une vitesse périphérique relative entre les saillies (152) et la surface coulissante d'étanchéité (112) est supérieure à un niveau prédéterminé.

4. Palier étanche de la revendication 3, dans lequel chacune de la pluralité de saillies (152) s'étend dans une direction perpendiculaire à la direction circonférentielle, et a une forme arrondie de sorte qu'une distance entre la saillie (152) et la surface coulissante d'étanchéité (112) diminue progressivement à partir des extrémités respectives de la saillie (152) vers un centre de la saillie (152), par rapport à une largeur circonférentielle de la saillie (152).

5. Palier étanche de l'une des revendications 1 à 4, dans lequel l'élément d'étanchéité (150) comporte un noyau métallique (156), et la lèvre d'étanchéité (152) est formée d'une section en caoutchouc vulcanisé fixée à au moins une partie radialement interne du noyau métallique (156).

6. Palier étanche de l'une des revendications 1 à 5, dans lequel le palier étanche supporte au moins une partie rotative (S1, S2) de l'un(e) d'une transmission et d'un différentiel, d'un véhicule.
